# EUROPEAN PATENT APPLICATION

(11) **EP 4 847 915 A1**
(43) Date of publication of application: **02.12.2026**
(21) Application number: 25859678.2
(22) Date of filing: 26.08.2025
(51) Int. Cl.: G01N 27/82

(54) **APPARATUS AND METHOD FOR LIFT-OFF RESITANT DETECTION OF CIRCUMFERENTIAL WELD DEFECTS IN PIPE**

(30) Priority: 02.09.2024 CN 202411215115
(71) Applicant: China Oil & Gas Pipeline Network Corporation, Beijing 100013 (CN); Pipechina Institute of Science and Technology, Tianjin 300450 (CN)
(72) Inventor: CHEN, Pengchao, Tianjin 300450 (CN); DUAN, Jinyao, Tianjin 300450 (CN); LI, Rui, Tianjin 300450 (CN); FU, Kuan, Tianjin 300450 (CN); MA, Jiangtao, Tianjin 300450 (CN); WANG, Yanan, Tianjin 300450 (CN)
(74) Representative: HGF
(86) International application number: PCT/CN2025/116857
(87) International publication number: WO 2026/046138

(57) **Abstract**

Provided are an apparatus and a method for lift-off resistant detection of pipeline circumferential weld defects. The apparatus sends the AC sinusoidal signal to the first orthogonal excitation unit (131) and the second orthogonal excitation unit (132) through the excitation signal generator (110), enabling the first excitation coil (1311) and the second excitation coil (1312) arranged orthogonally to each other and included in the first orthogonal excitation unit (131), and the third excitation coil (1321) and the fourth excitation coil (1322) arranged orthogonally to each other and included in the second orthogonal excitation unit (132), to generate a composite alternating magnetic field. When the apparatus passes over the pipeline circumferential weld, since the defects located at different positions and angles of the pipeline circumferential weld are able to perpendicularly intersect the induced magnetic field lines in the composite alternating magnetic field, the pipeline circumferential weld defects at different positions and angles can be quickly and accurately detected by detecting the amplitude of the induced voltage generated by the perpendicular intersection, thus improving the detection efficiency and reducing detection costs.

## Description

This application claims priority to Chinese Patent Application No. 202411215115.2 filed Sep. 2, 2024, the present disclosure of which is incorporated herein by reference in its entirety.

### TECHNICAL FIELD

The present disclosure relates to the technical field of pipeline detection, and for example, to an apparatus and a method for lift-off resistant detection of pipeline circumferential weld defects.

### BACKGROUND

Since pipeline transportation has advantages of high speed, high safety and good economy in transporting oil and natural gas, it has become one of the primary methods of oil and gas resource transport. Oil and gas pipelines are crucial infrastructure equipment in the oil and gas transportation system. However, influenced by factors such as on-site welding construction, operating environment and technical understanding, circumferential welds have always been the weak points of pipelines, and circumferential weld cracking has become one of the main failure modes of pipelines. Therefore, detection of pipeline circumferential weld defects is particularly important to ensure the rapid and safe transportation of oil and gas resources.

In the related art, the detection methods for pipeline circumferential weld defects may generally be divided into internal pipeline detection technologies and external pipeline detection technologies. On the one hand, the internal pipeline detection technologies are based on magnetic flux leakage detection. However, magnetic flux leakage detection can only detect part of volumetric defects in circumferential welds and is greatly affected by defect angles. For example, when circumferential weld defects do not intersect the induced magnetic field lines, accurate defect detection cannot be achieved. On the other hand, the external pipeline detection technologies are typically combined with excavation verification. However, the external pipeline detection technologies involve a heavy workload, low recognition rate, long detection cycle and poor timeliness.

### SUMMARY

Embodiments of the present disclosure provide an apparatus and a method for lift-off resistant detection of pipeline circumferential weld defects to implement rapid and accurate detection of pipeline circumferential weld defects at different positions and angles, thereby improving detection efficiency and reducing detection costs.

In a first aspect, the present disclosure provides an apparatus for lift-off resistant detection of pipeline circumferential weld defects. The apparatus includes an excitation signal generator, a time division multiplexing module, at least one excitation module, a signal acquisition module and a signal processing module. The excitation signal generator is connected to the time division multiplexing module, the time division multiplexing module is connected to the excitation module, the excitation module is connected to the signal acquisition module, and the signal acquisition module is connected to the signal processing module. The excitation module includes a first orthogonal excitation unit, a second orthogonal excitation unit and a detection unit. Both the first orthogonal excitation unit and the second orthogonal excitation unit are connected to the time division multiplexing module. The first orthogonal excitation unit includes a first excitation coil and a second excitation coil arranged orthogonally to each other. The second orthogonal excitation unit includes a third excitation coil and a fourth excitation coil arranged orthogonally to each other. The detection unit is connected to the signal acquisition module. The excitation signal generator is configured to output an alternating current (AC) sinusoidal signal to the time division multiplexing module. The time division multiplexing module is configured to send, according to the AC sinusoidal signal, a first AC sinusoidal signal to the first excitation coil, a second AC sinusoidal signal to the second excitation coil, a third AC sinusoidal signal to the third excitation coil and a fourth AC sinusoidal signal to the fourth excitation coil to form a composite alternating magnetic field. The composite alternating magnetic field includes a magnetic field formed by the first excitation coil, a magnetic field formed by the second excitation coil, a magnetic field formed by the third excitation coil and a magnetic field formed by the fourth excitation coil. The second AC sinusoidal signal is a signal obtained by phase shifting the first AC sinusoidal signal by 90°, the third AC sinusoidal signal is a signal having the same amplitude as and an opposite direction to the first AC sinusoidal signal, and the fourth AC sinusoidal signal is a signal obtained by phase shifting the third AC sinusoidal signal by 90°. The detection unit is configured to, when the excitation module passes over a to-be-detected pipeline circumferential weld, acquire an induced voltage amplitude of the to-be-detected pipeline circumferential weld, and is configured to send the induced voltage amplitude to the signal acquisition module. The signal acquisition module is configured to determine identification information of the to-be-detected pipeline circumferential weld, and is configured to send the induced voltage amplitude and the identification information of the to-be-detected pipeline circumferential weld to the signal processing module. The signal processing module is configured to determine a defect detection result of the to-be-detected pipeline circumferential weld based on the induced voltage amplitude and the identification information of the to-be-detected pipeline circumferential weld. The defect detection result includes a normal result and an abnormal result.

In some embodiments, the apparatus includes multiple excitation modules, and the multiple excitation modules are arranged around a circumferential array along the time division multiplexing module.

In some embodiments, the signal acquisition module further communicates with the time division multiplexing module. The signal acquisition module is further configured to determine identification information of a target excitation module for acquiring the induced voltage amplitude of the to-be-detected pipeline circumferential weld. The target excitation module is one of the multiple excitation modules. The signal acquisition module is further configured to send the identification information of the target excitation module to the signal processing module. The signal processing module is configured to determine a defect location of the to-be-detected pipeline circumferential weld based on the identification information of the target excitation module.

In some embodiments, each of the first excitation coil, the second excitation coil, the third excitation coil and the fourth excitation coil is a rectangular coil. The detection unit includes a circular coil.

In some embodiments, the excitation signal generator includes a sine wave generator and a phase shifter. The excitation signal generator is configured to output a fifth AC sinusoidal signal and a sixth AC sinusoidal signal to the time division multiplexing module. The fifth AC sinusoidal signal and the sixth AC sinusoidal signal have opposite signal directions and the same amplitude. The time division multiplexing module is configured to obtain the first AC sinusoidal signal and the second AC sinusoidal signal based on the fifth AC sinusoidal signal, obtain the third AC sinusoidal signal and the fourth AC sinusoidal signal based on the sixth AC sinusoidal signal, send the first AC sinusoidal signal to the first excitation coil, send the second AC sinusoidal signal to the second excitation coil, send the third AC sinusoidal signal to the third excitation coil and send the fourth AC sinusoidal signal to the fourth excitation coil.

In some embodiments, the signal processing module is configured to, when the induced voltage amplitude of the to-be-detected pipeline circumferential weld is greater than a preset threshold, determine that the defect detection result of the to-be-detected pipeline circumferential weld is the abnormal result.

In some embodiments, the signal processing module is configured to, when the induced voltage amplitude of the to-be-detected pipeline circumferential weld is less than or equal to a preset threshold, determine that the defect detection result of the to-be-detected pipeline circumferential weld is the normal result.

In some embodiments, the apparatus further includes a protective housing. The excitation signal generator, the time division multiplexing module, the excitation module, the signal acquisition module and the signal processing module are all disposed inside the protective housing.

In some embodiments, the apparatus further includes an arc-shaped ceramic sheet disposed at a bottom of the protective housing.

In a second aspect, the present disclosure provides a method for lift-off resistant detection of pipeline circumferential weld defects being applied to an apparatus for lift-off resistant detection of pipeline circumferential weld defects. The apparatus includes an excitation signal generator, a time division multiplexing module, at least one excitation module, a signal acquisition module and a signal processing module. The excitation signal generator is connected to the time division multiplexing module, the time division multiplexing module is connected to the excitation module, the excitation module is connected to the signal acquisition module, and the signal acquisition module is connected to the signal processing module. The excitation module includes a first orthogonal excitation unit, a second orthogonal excitation unit and a detection unit. Both the first orthogonal excitation unit and the second orthogonal excitation unit are connected to the time division multiplexing module. The first orthogonal excitation unit includes a first excitation coil and a second excitation coil arranged orthogonally to each other. The second orthogonal excitation unit includes a third excitation coil and a fourth excitation coil arranged orthogonally to each other. The detection unit is connected to the signal acquisition module.

The method includes the following steps: the excitation signal generator outputs an AC sinusoidal signal to the time division multiplexing module. According to the AC sinusoidal signal, the time division multiplexing module sends a first AC sinusoidal signal to the first excitation coil, a second AC sinusoidal signal to the second excitation coil, a third AC sinusoidal signal to the third excitation coil, and a fourth AC sinusoidal signal to the fourth excitation coil to form a composite alternating magnetic field. The composite alternating magnetic field includes a magnetic field formed by the first excitation coil, a magnetic field formed by the second excitation coil, a magnetic field formed by the third excitation coil and a magnetic field formed by the fourth excitation coil. The second AC sinusoidal signal is a signal obtained by phase shifting the first AC sinusoidal signal by 90°. The third AC sinusoidal signal is a signal having the same amplitude as and an opposite direction to the first AC sinusoidal signal. The fourth AC sinusoidal signal is a signal obtained by phase shifting the third AC sinusoidal signal by 90°. When the excitation module passes over a to-be-detected pipeline circumferential weld, the detection unit acquires an induced voltage amplitude of the to-be-detected pipeline circumferential weld, and sends the induced voltage amplitude to the signal acquisition module. The signal acquisition module determines identification information of the to-be-detected pipeline circumferential weld, and sends the induced voltage amplitude and the identification information of the to-be-detected pipeline circumferential weld to the signal processing module. The signal processing module determines a defect detection result of the to-be-detected pipeline circumferential weld based on the induced voltage amplitude and the identification information of the to-be-detected pipeline circumferential weld. The defect detection result includes a normal result and an abnormal result.

### BRIEF DESCRIPTION OF DRAWINGS

FIG. 1 is a block diagram of a hardware structure of an apparatus for lift-off resistant detection of pipeline circumferential weld defects according to an embodiment of the present disclosure.
FIG. 2 is a schematic diagram of the hardware structure of an apparatus for lift-off resistant detection of pipeline circumferential weld defects according to an embodiment of the present disclosure.
FIG. 3 is a schematic diagram of AC sinusoidal signals according to an embodiment of the present disclosure.
FIG. 4 is a schematic diagram of induced magnetic field lines in a composite alternating magnetic field intersected by defects at different positions and angles according to an embodiment of the present disclosure.
FIG. 5 is a schematic diagram of connections between excitation modules and a time division multiplexing module according to an embodiment of the present disclosure.
FIG. 6 is a pulse sequence diagram of a time division multiplexing module according to an embodiment of the present disclosure.
FIG. 7 is a flow chart of a method for lift-off resistant detection of pipeline circumferential weld defects according to an embodiment of the present disclosure.

### Reference List:

- 110: excitation signal generator
- 120: time division multiplexing module
- 130: excitation module
- 131: first orthogonal excitation unit
- 1311: first excitation coil
- 1312: second excitation coil
- 132: second orthogonal excitation unit
- 1321: third excitation coil
- 1322: fourth excitation coil
- 133: detection unit
- 140: signal acquisition module
- 150: signal processing module
- 160: protective housing
- 170: arc-shaped ceramic sheet

### DETAILED DESCRIPTION

Embodiments of the present disclosure are described hereinafter in conjunction with the drawings in embodiments of the present disclosure. In the description of the present disclosure, unless otherwise specified, "/" indicates an "or" relationship between the associated objects, for example, A/B indicates A or B. "And/or" in the present disclosure describes an association relationship between associated objects, and indicates that three relationships may exist. For example, A and/or B may represent the following cases: only A exists, both A and B exist, and only B exists. A and B may be singular or plural. Moreover, in the description of the present disclosure, unless otherwise specified, "multiple" refers to two or more than two. "At least one of the following items (elements)" or a similar expression thereof indicates any combination of these items (elements), including a single item (element) or any combination of multiple items (elements). For example, at least one item (one) of a, b, or c may represent a, b, c, a and b, a and c, b and c, or a, b, and c, where each of a, b, and c may be an element, or may be multiple elements.

In embodiments of the present disclosure, the terms "first" and "second" are used to distinguish identical or similar items with essentially the same function and effect. Those skilled in the art can understand that the terms "first" and "second" do not limit the quantity and execution order, and that the terms "first" and "second" do not necessarily imply that the elements are different.

In embodiments of the present disclosure, the terms "in an example" or "for example" are used to represent giving an example, an illustration or a description. Any embodiment or design solution described as "in an example" or "for example" in embodiments of the present disclosure should not be construed as having more advantages than another embodiment or design solution. Exactly, use of the terms "in an example" or "for example" or the like is intended to present a related concept in a specific manner to facilitate understanding.

Embodiments of the present disclosure provide an apparatus for lift-off resistant detection of pipeline circumferential weld defects. The apparatus includes an excitation signal generator, a time division multiplexing module, at least one excitation module, a signal acquisition module and a signal processing module. The excitation signal generator is connected to the time division multiplexing module, the time division multiplexing module is connected to the excitation module, the excitation module is connected to the signal acquisition module, and the signal acquisition module is connected to the signal processing module. The excitation module includes a first orthogonal excitation unit, a second orthogonal excitation unit and a detection unit. Both the first orthogonal excitation unit and the second orthogonal excitation unit are connected to the time division multiplexing module. The first orthogonal excitation unit includes a first excitation coil and a second excitation coil arranged orthogonally to each other. The second orthogonal excitation unit includes a third excitation coil and a fourth excitation coil arranged orthogonally to each other. The detection unit is connected to the signal acquisition module. The excitation signal generator is configured to output an alternating current (AC) sinusoidal signal to the time division multiplexing module. The time division multiplexing module is configured to send, according to the AC sinusoidal signal, a first AC sinusoidal signal to the first excitation coil, a second AC sinusoidal signal to the second excitation coil, a third AC sinusoidal signal to the third excitation coil and a fourth AC sinusoidal signal to the fourth excitation coil to form a composite alternating magnetic field. The composite alternating magnetic field includes a magnetic field formed by the first excitation coil, a magnetic field formed by the second excitation coil, a magnetic field formed by the third excitation coil and a magnetic field formed by the fourth excitation coil. The second AC sinusoidal signal is a signal obtained by phase shifting the first AC sinusoidal signal by 90°, the third AC sinusoidal signal is a signal having the same amplitude as and an opposite direction to the first AC sinusoidal signal, and the fourth AC sinusoidal signal is a signal obtained by phase shifting the third AC sinusoidal signal by 90°. The detection unit is configured to, when the excitation module passes over a to-be-detected pipeline circumferential weld, acquire an induced voltage amplitude of the to-be-detected pipeline circumferential weld, and is configured to send the induced voltage amplitude to the signal acquisition module. The signal acquisition module is configured to determine identification information of the to-be-detected pipeline circumferential weld, and is configured to send the induced voltage amplitude and the identification information of the to-be-detected pipeline circumferential weld to the signal processing module. The signal processing module is configured to determine a defect detection result of the to-be-detected pipeline circumferential weld based on the induced voltage amplitude and the identification information of the to-be-detected pipeline circumferential weld. The defect detection result includes a normal result and an abnormal result.

The apparatus provided by embodiments of the present disclosure sends the AC sinusoidal signal to the first orthogonal excitation unit and the second orthogonal excitation unit through the excitation signal generator, enabling the first excitation coil and the second excitation coil arranged orthogonally to each other and included in the first orthogonal excitation unit, and the third excitation coil and the fourth excitation coil arranged orthogonally to each other and included in the second orthogonal excitation unit, to generate a composite alternating magnetic field. When the apparatus passes over the pipeline circumferential weld, since the defects located at different positions and angles of the pipeline circumferential weld are able to perpendicularly intersect the induced magnetic field lines in the composite alternating magnetic field, the pipeline circumferential weld defects at different positions and angles can be quickly and accurately detected by detecting the amplitude of the induced voltage generated by the perpendicular intersection, thus improving the detection efficiency and reducing detection costs.

To sum up, the apparatus provided by embodiments of the present disclosure detects the amplitude of the induced voltage generated by multiple excitation coils, arranges multiple excitation units in a circumferentially symmetric differential manner, and sends different AC sinusoidal signals to each excitation unit, implementing physical filtering of the detection signal at a large lift-off and full coverage detection by the rotating excitation magnetic field, and solving detection problem of circumferential weld defects at different angles. The present disclosure can effectively improve the sensitivity and reliability of defect detection, and greatly reduce the missed detection rate of pipeline circumferential weld defects.

In the present disclosure, "lift-off" refers to the change or instantaneous separation of the non-contact distance between the defect detection apparatus and the surface of the pipeline circumferential weld, which leads to the attenuation or distortion of the detection signal, and "lift-off resistant" refers to reducing the influence of this phenomenon on the detection results.

The apparatus for lift-off resistant detection of pipeline circumferential weld defects provided by embodiments of the present disclosure will be described hereinafter in conjunction with drawings of the description.

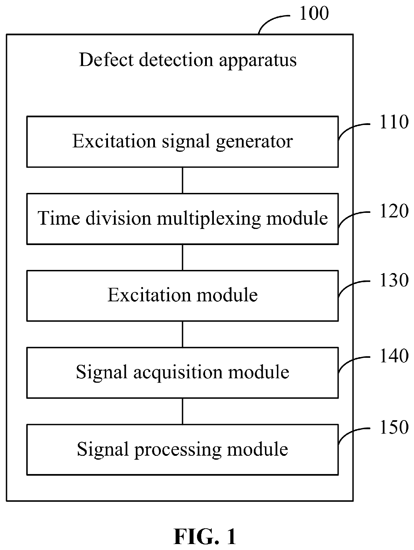

FIG. 1 is a block diagram of a hardware structure of an apparatus for lift-off resistant detection of pipeline circumferential weld defects according to an embodiment of the present disclosure. The apparatus for lift-off resistant detection of pipeline circumferential weld defects 100 (hereinafter referred to as defect detection apparatus 100) includes an excitation signal generator 110, a time division multiplexing module 120, at least one excitation module 130, a signal acquisition module 140 and a signal processing module 150. The excitation signal generator 110 is connected to the time division multiplexing module 120, the time division multiplexing module 120 is connected to the excitation module 130, the excitation module 130 is connected to the signal acquisition module 140, and the signal acquisition module 140 is connected to the signal processing module 150.

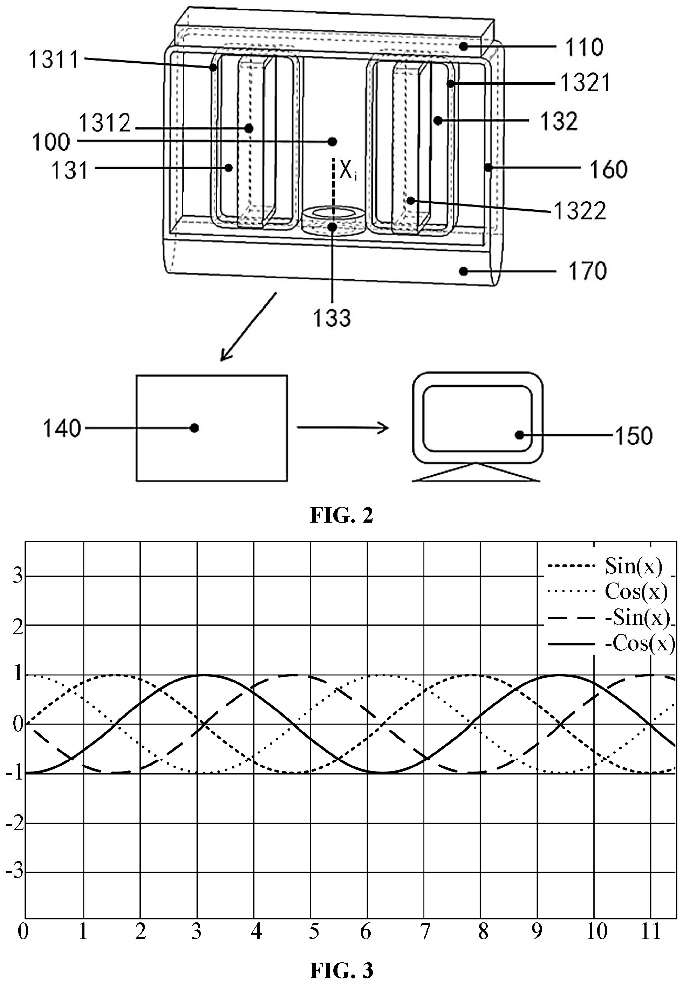

Referring to FIG. 2, FIG. 2 is a structural schematic diagram of a defect detection apparatus according to an embodiment of the present disclosure. The excitation module 130 includes a first orthogonal excitation unit 131, a second orthogonal excitation unit 132 and a detection unit 133. Both the first orthogonal excitation unit 131 and the second orthogonal excitation unit 132 are connected to the time division multiplexing module 120. The first orthogonal excitation unit 131 includes a first excitation coil 1311 and a second excitation coil 1312 arranged orthogonally to each other. The second orthogonal excitation unit 132 includes a third excitation coil 1321 and a fourth excitation coil 1322 arranged orthogonally to each other. The detection unit 133 is connected to the signal acquisition module 140.

Optionally, combined with FIG. 2, the defect detection apparatus 100 further includes a protective housing 160. The excitation signal generator 110, the time division multiplexing module 120, the excitation module 130, the signal acquisition module 140 and the signal processing module 150 are all disposed inside the protective housing 160.

In some embodiments, the signal acquisition module 140, the signal processing module 150, the excitation signal generator 110, and the time division multiplexing module 120 may also be disposed outside the protective housing 160.

By providing the protective housing 160, embodiments of the present disclosure can provide a carrier and protection for each component included in the defect detection apparatus 100, thereby implementing the encapsulation of each module inside the defect detection apparatus 100.

In some embodiments, combined with FIG. 2, the defect detection apparatus 100 further includes an arc-shaped ceramic sheet 170, and the arc-shaped ceramic sheet 170 is disposed at a bottom of the protective housing 160.

In an example, the arc-shaped ceramic sheet 170 is configured to form a buffer between the defect detection apparatus 100 and the to-be-detected pipeline circumferential weld, thereby reducing the impact force between the defect detection apparatus 100 and the to-be-detected pipeline circumferential weld, thus protecting the defect detection apparatus 100. The arc-shaped ceramic sheet 170 is provided with a profile-following structural design for the weld toe of the circumferential weld to reduce the vibration of the defect detection apparatus 100 when passing over the circumferential weld, thus enabling a smooth transition of the defect detection apparatus 100 when passing over the circumferential weld. The profile-following structure of the arc-shaped ceramic sheet 170 ensures the fit between the defect detection apparatus 100 and the circumferential weld as well as the weld toe. Moreover, the ceramic material of the arc-shaped ceramic sheet 170 can enhance the wear resistance and stability of the defect detection apparatus 100 during long-distance operation. In other words, by using the arc-shaped ceramic sheet 170 as the base of the defect detection apparatus 100, the defect detection apparatus 100 can achieve a smoother transition when passing over the reinforcement of the circumferential weld through the profile-following design, reducing the lift-off value and vibration of the defect detection apparatus 100 while providing better fit and wear resistance at the weld toe, and effectively extending the service life of the defect detection apparatus 100.

In some embodiments, referring to FIG. 2, each of the first excitation coil 1311, the second excitation coil 1312, the third excitation coil 1321 and the fourth excitation coil 1322 is a rectangular coil. Each rectangular coil includes two long sides and two short sides. The two short sides of the first excitation coil 1311 are perpendicular to and intersect the two short sides of the second excitation coil 1312, respectively. The two short sides of the third excitation coil 1321 are perpendicular to and intersect the fourth excitation coil 1322, respectively.

The excitation signal generator 110 is configured to output an AC sinusoidal signal to the time division multiplexing module 120. The time division multiplexing module 120 is configured to send, according to the AC sinusoidal signal, a first AC sinusoidal signal to the first excitation coil 1311, a second AC sinusoidal signal to the second excitation coil 1312, a third AC sinusoidal signal to the third excitation coil 1321 and a fourth AC sinusoidal signal to the fourth excitation coil 1322 to form a composite alternating magnetic field. The composite alternating magnetic field includes a magnetic field formed by the first excitation coil 1311, a magnetic field formed by the second excitation coil 1312, a magnetic field formed by the third excitation coil 1321 and a magnetic field formed by the fourth excitation coil 1322.

The second AC sinusoidal signal is a signal obtained by phase shifting the first AC sinusoidal signal by 90°, the third AC sinusoidal signal is a signal having the same amplitude as and an opposite direction to the first AC sinusoidal signal, and the fourth AC sinusoidal signal is a signal obtained by phase shifting the third AC sinusoidal signal by 90°.

In one example, when the expression for the first AC sinusoidal signal is *A* sin (*ωt* + *φ*), the expression for the second AC sinusoidal signal is *A* cos(*ωt* + *φ*) , the expression for the third AC sinusoidal signal is *-A* sin(*ωt* + *φ*), and the expression for the fourth AC sinusoidal signal is -*A* cos(*ωt* +*φ*).

In an example, referring to FIG. 3, FIG. 3 is a schematic diagram of AC sinusoidal signals according to an embodiment of the present disclosure. A first AC sinusoidal signal sin(x), a second AC sinusoidal signal cos(x), a third AC sinusoidal signal -sin(x) and a fourth AC sinusoidal signal -cos(x) are shown.

In one possible implementation, the excitation signal generator 110 includes a sine wave generator and a phase shifter. The excitation signal generator 110 is configured to output a fifth AC sinusoidal signal and a sixth AC sinusoidal signal to the time division multiplexing module 120. The fifth AC sinusoidal signal and the sixth AC sinusoidal signal have opposite signal directions and the same amplitude. The time division multiplexing module 120 is configured to obtain the first AC sinusoidal signal and the second AC sinusoidal signal based on the fifth AC sinusoidal signal, obtain the third AC sinusoidal signal and the fourth AC sinusoidal signal based on the sixth AC sinusoidal signal, send the first AC sinusoidal signal to the first excitation coil 1311, send the second AC sinusoidal signal to the second excitation coil 1312, send the third AC sinusoidal signal to the third excitation coil 1321 and send the fourth AC sinusoidal signal to the fourth excitation coil 1322.

In some embodiments, the sine wave generator is configured to output a stable basic sinusoidal signal, and the phase shifter is configured to achieve a 90° or 180° phase shift. The sine wave generator and the phase shifter cooperate to generate a fifth AC sinusoidal signal and a sixth AC sinusoidal signal, and the fifth AC sinusoidal signal and the sixth AC sinusoidal signal are output to the time division multiplexing module 120 to provide a key signal source for the formation of the composite alternating magnetic field, supporting full-angle defect detection.

In an example, the apparatus provided in the embodiment of the present disclosure sends different AC sinusoidal signals to the first excitation coil 1311, the second excitation coil 1312, the third excitation coil 1321 and the fourth excitation coil 1322, enabling the magnetic field generated by the first excitation coil 1311, the magnetic field generated by the second excitation coil 1312, the magnetic field generated by the third excitation coil 1321 and the magnetic field generated by the fourth excitation coil 1322 to form the composite alternating magnetic field, which can also be understood as a magnetic field formed by two sets of real-time rotating vector with opposite directions and the same amplitude. During the normal operation of the defect detection apparatus 100, when the defect detection apparatus 100 passes over the pipe wall of the oil and gas pipeline or the circumferential weld without defects, the difference between the rotating magnetic field signal formed by the first orthogonal excitation unit 131 and the rotating magnetic field signal formed by the second orthogonal excitation unit 132 at the detection unit 133 is equal to zero. When the defect detection apparatus 100 passes over the circumferential weld with defects, defects exert different disturbance effects on the rotating magnetic field of the first orthogonal excitation unit 131 and the rotating magnetic field of the second orthogonal excitation unit 132. In this case, the two rotating magnetic field signals acquired by the detection unit 133 show a difference in magnitude, and thus the induced voltage amplitude characterizing the defects can be obtained.

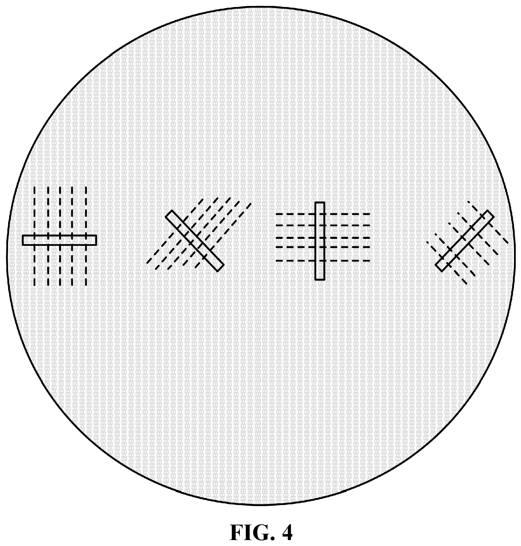

In an example, referring to FIG. 4, FIG. 4 is a schematic diagram of induced magnetic field lines intersected by defects at different positions and angles in a composite alternating magnetic field. FIG. 4 shows the intersection process of induced magnetic field lines by circumferential weld defects at four different positions and angles. Since the first orthogonal excitation unit 131 and the second orthogonal excitation unit 132 generate a composite rotating magnetic field, for circumferential weld defects at different directions, positions and angles, there will be a situation where the defects perpendicularly intersect the induced magnetic field lines, enabling the detection unit 133 to acquire the induced voltage amplitude. Therefore, high detection sensitivity for circumferential weld defects at different angles is achieved.

The detection unit 133 is configured to, when the excitation module 130 passes over a to-be-detected pipeline circumferential weld, acquire an induced voltage amplitude of the to-be-detected pipeline circumferential weld, and is configured to send the induced voltage amplitude to the signal acquisition module 140.

In some embodiments, the detection unit 133 includes a circular coil. The circular coil may also be referred to as a detection coil.

In an example, during the operation of the defect detection apparatus 100, the defect detection apparatus 100 moves at a constant speed in the oil and gas pipeline, and the central axis Xᵢ of the circular coil is parallel to the radial direction of the pipeline and perpendicular to the axial direction of the pipeline and the circumferential direction of the pipeline.

The signal acquisition module 140 is configured to determine identification information of the to-be-detected pipeline circumferential weld, and is configured to send the induced voltage amplitude and the identification information of the to-be-detected pipeline circumferential weld to the signal processing module 150.

The signal processing module 150 is configured to determine a defect detection result of the to-be-detected pipeline circumferential weld based on the induced voltage amplitude and the identification information of the to-be-detected pipeline circumferential weld, and the defect detection result includes a normal result and an abnormal result.

In an example, the signal processing module 150 is configured to, when the induced voltage amplitude of the to-be-detected pipeline circumferential weld is greater than a preset threshold, determine that the defect detection result of the to-be-detected pipeline circumferential weld is the abnormal result. The signal processing module 150 is configured to, when the induced voltage amplitude of the to-be-detected pipeline circumferential weld is less than or equal to the preset threshold, determine that the defect detection result of the to-be-detected pipeline circumferential weld is the normal result.

The preset threshold may be configured according to the actual detection scenario to adapt to the defect detection requirements in different scenarios.

In some embodiments, the defect detection apparatus 100 includes multiple excitation modules 130, and the multiple excitation modules 130 are arranged in a circumferential array around the time division multiplexing module 120.

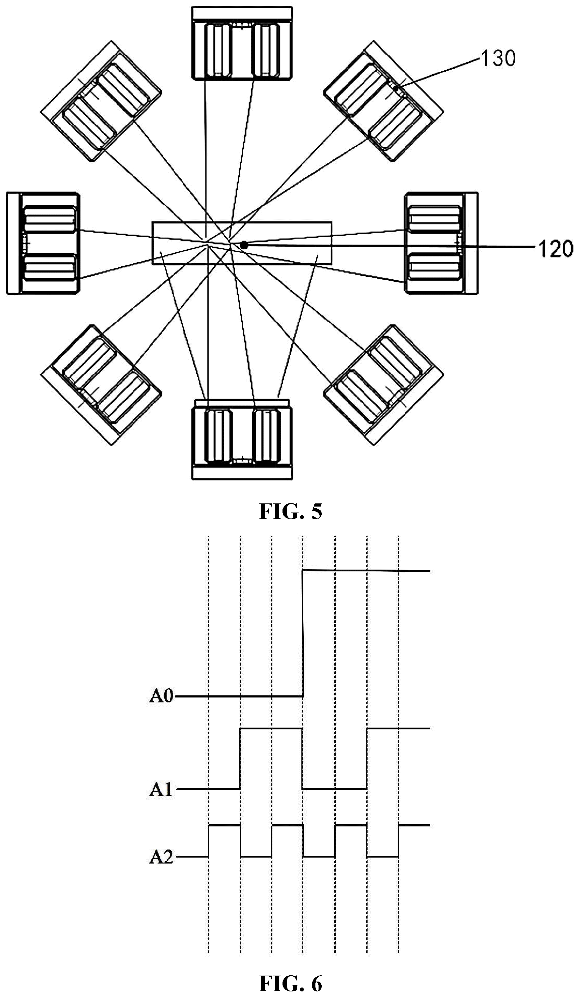

In an example, referring to FIG. 5, FIG. 5 is a schematic diagram of connections between excitation modules and a time division multiplexing module according to an embodiment of the present disclosure. The defect detection apparatus 100 includes eight excitation modules 130, and the eight excitation modules 130 are arranged in a circumferential array along the time division multiplexing module 120. During the normal operation of the defect detection apparatus 100, the defect detection apparatus 100 advances in the oil pipeline at a constant speed. Each pipeline circumferential weld is pre-divided into eight segments, and each excitation module 130 is configured to detect one of the eight segments of each circumferential weld. That is, for the 360° circumference of each circumferential weld, each excitation module 130 is configured to detect a 45° circumferential segment of each pipeline circumferential weld. In this manner, the locations of the pipeline circumferential weld defects can be determined based on the excitation module 130 that acquires the induced voltage amplitude.

The operation process of the time division multiplexing module 120 is illustrated by an example below. The time division multiplexing module 120 is used to select the paths for multi-channel excitation coils, enabling the two AC sinusoidal signals (i.e., the fifth AC sinusoidal signal and the sixth AC sinusoidal signal) sent by the excitation signal generator 110 to be used by multiple excitation modules 130. The output interface of the AC sinusoidal signal that is generated by the excitation signal generator 110 and satisfies the excitation intensity requirements and the detection signal output interface are respectively connected to the multiplexed common signal input/output pin Z of the time division multiplexing module 120, and one end of the coil wire of all the excitation modules 130 is commonly connected to GND. In the case where the defect detection apparatus 100 includes eight excitation modules 130, the other end of the wire of the first orthogonal excitation unit 131 of each excitation module 130 is correspondingly connected to an independent input/output interface *X*_{1*a*}, *X*_{2*a*},L , *X*_{8*a*} , the other end of the wire of the second orthogonal excitation unit 132 of each excitation module 130 is correspondingly connected to an independent input/output interface *X*_{1*b*}, *X*_{2*b*},L , *X*_{8*b*} , and the other end of the detection unit 133 (including the detection coil) of each excitation module 130 is connected to an independent input/output interface *Y*₁,*Y*₂,L ,Y₈. By controlling the high/low level combinations of the address terminals such as A0, A1, and A2, the conduction between the channel common terminals Z_{1A}, Z_{1B}, Z₂ and the channels *X*_{1*a*}, *X*_{2*a*},L , *X*_{8*a*} , *X*_{1*b*}, *X*_{2*b*},L , *X*_{8*b*} , and *Y*₁,*Y*₂,L ,Y₈ is controlled, thereby implementing the eight-channel time-division multiplexing of two AC sinusoidal signals. In other words, the two AC sinusoidal signals can be reused by the eight excitation modules 130 in a time-division manner. The pulse sequence is shown in FIG. 6, and the channel gating logic combinations are shown in Table 1.

**Table 1**

| A0 | A1 | A2 | Channel |
|---|---|---|---|
| L | L | L | X₁ₐ, X_{1b}, Y₁, Z_{1A}, Z_{1B}, Z₂ |
| L | L | H | X₂ₐ, X_{2b}, Y₂, Z_{1A}, Z_{1B}, Z₂ |
| L | H | L | X₃ₐ, X_{3b}, Y₃, Z_{1A}, Z_{1B}, Z₂ |
| L | H | H | X₄ₐ, X_{4b}, Y₄, Z_{1A}, Z_{1B}, Z₂ |
| H | L | L | X₅ₐ, X_{5b}, Y₅, Z_{1A}, Z_{1B}, Z₂ |
| H | L | H | X₆ₐ, X_{6b}, Y₆, Z_{1A}, Z_{1B}, Z₂ |
| H | H | L | X₇ₐ, X_{7b}, Y₇, Z_{1A}, Z_{1B}, Z₂ |
| H | H | H | X₈ₐ, X_{8b}, Y₈, Z_{1A}, Z_{1B}, Z₂ |

Through the logical combinations shown in Table 1, two AC sinusoidal signals are able to be reused by the eight excitation modules 130 in a time-division manner through the time division multiplexing module 120. It should be noted that the operation process of the above time division multiplexing module 120 is only an example.

In some embodiments, the signal acquisition module 140 also communicates with the time division multiplexing module 120. The signal acquisition module 140 is further configured to determine identification information of a target excitation module for acquiring the induced voltage amplitude of the to-be-detected pipeline circumferential weld. The target excitation module is one of the multiple excitation modules 130. The signal acquisition module 140 is further configured to send the identification information of the target excitation module to the signal processing module 150. The signal processing module 150 is configured to determine a defect location of the to-be-detected pipeline circumferential weld based on the identification information of the target excitation module.

In an example, the signal acquisition module 140 determines a detection duration of the induced voltage amplitude of the to-be-detected pipeline circumferential weld based on the pulse width modulation (PWM) wave input to the time division multiplexing module 120, then determines the target excitation module for acquiring the induced voltage amplitude of the to-be-detected pipeline circumferential weld based on the detection duration, and subsequently determines the defect location of the to-be-detected pipeline circumferential weld based on the position of the target excitation module in the pipeline.

According to embodiments of the present disclosure, the time division multiplexing module 120 is used to implement the input of AC sinusoidal signals to the multiple excitation modules 130, so that the power consumption of the excitation signal generator 110 can be reduced. Moreover, the defect location of the to-be-detected pipeline circumferential weld can be further determined by determining the target excitation module that detects the induced voltage amplitude, thereby improving the confidence of the defect detection result, reducing the defect detection duration, and enhancing the defect detection efficiency.

The above example of eight excitation modules 130 is for illustrative purposes only. Embodiments of the present disclosure may provide more or fewer excitation modules 130 according to the actual defect detection requirements.

As described above, the apparatus provided by embodiments of the present disclosure sends AC sinusoidal signals to the first orthogonal excitation unit 131 and the second orthogonal excitation unit 132 through the excitation signal generator 110, enabling the first excitation coil 1311 and the second excitation coil 1312 arranged orthogonally to each other and included in the first orthogonal excitation unit 131, and the third excitation coil 1321 and the fourth excitation coil 1322 arranged orthogonally to each other and included in the second orthogonal excitation unit 132, to generate a composite alternating magnetic field. When the defect detection apparatus 100 passes over the pipeline circumferential weld, since the defects located at different positions and angles of the pipeline circumferential weld are able to perpendicularly intersect the induced magnetic field lines in the composite alternating magnetic field, the pipeline circumferential weld defects at different positions and angles can be quickly and accurately detected by detecting the amplitude of the induced voltage generated by the perpendicular intersection, thus improving the detection efficiency and reducing detection costs.

To sum up, the apparatus provided by embodiments of the present disclosure detects the amplitude of the induced voltage generated by multiple excitation coils, arranges multiple excitation units in a circumferentially symmetric differential manner, and sends different AC sinusoidal signals to each excitation unit, implementing the physical filtering of the detection signal at a large lift-off and full coverage detection of the rotating excitation magnetic field, and solving detection problem of circumferential weld defects at different angles. The present disclosure can effectively improve the sensitivity and reliability of defect detection, and greatly reduce the missed detection rate of pipeline circumferential weld defects. In other words, by providing the first orthogonal excitation unit 131 and the second orthogonal excitation unit 132, embodiments of the present disclosure perform detection based on the composite alternating magnetic field generated by the first orthogonal excitation unit 131 and the second orthogonal excitation unit 132, thus reducing the influence of the lift-off signal noise on the detection signal. The detection rate of multi-angle pipeline circumferential weld defects is improved, and the capability to assess pipeline circumferential weld failure risk is enhanced.

In some embodiments, the defect detection apparatus 100 of the present disclosure may be used for internal pipeline detection, is carried by a carrier into the pipeline, implements 360° scanning of the circumferential weld through the excitation modules 130 arranged in a circumferential array, and identifies multi-angle defects by using the composite alternating magnetic field. In other embodiments, the defect detection apparatus 100 of the present disclosure may be used for external pipeline detection, fits against the outside of the pipeline circumferential weld, reduces the lift-off vibration by means of the arc-shaped ceramic sheet 170, and controls the excitation coil path in combination with the time division multiplexing module 120, thus quickly locating the defect.

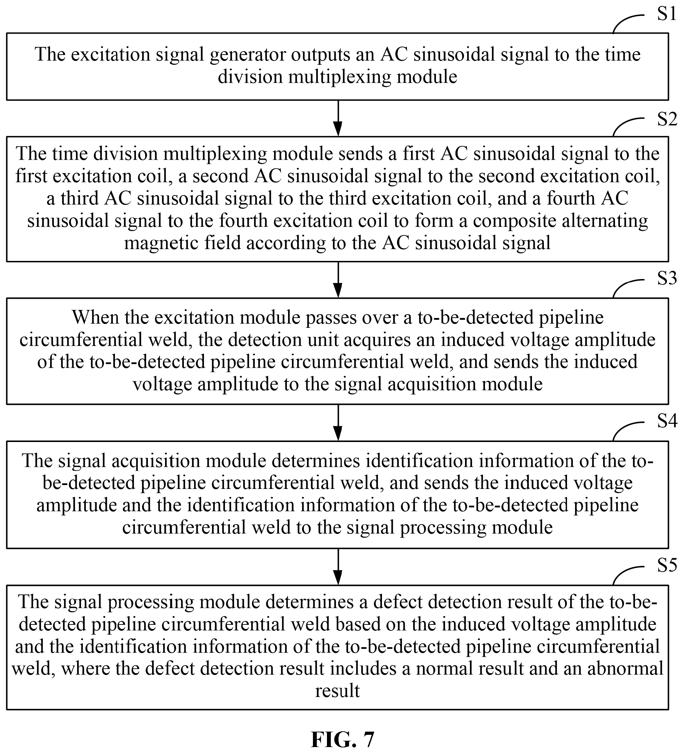

In some embodiments, referring to FIG. 7, embodiments of the present disclosure also provide a method for lift-off resistant detection of pipeline circumferential weld defects applied to the defect detection apparatus 100, and the method includes steps S1 to S5.

In S1, the excitation signal generator outputs an AC sinusoidal signal to the time division multiplexing module.

In an example, the AC sinusoidal signal includes a fifth AC sinusoidal signal and a sixth AC sinusoidal signal. The fifth AC sinusoidal signal and the sixth AC sinusoidal signal have opposite signal directions and the same amplitude. The amplitude A and angular frequency ω of the fifth AC sinusoidal signal and the sixth AC sinusoidal signal are determined according to the material of the pipeline where the to-be-detected pipeline circumferential weld is located.

In S2, according to the AC sinusoidal signal, the time division multiplexing module sends a first AC sinusoidal signal to the first excitation coil, a second AC sinusoidal signal to the second excitation coil, a third AC sinusoidal signal to the third excitation coil, and a fourth AC sinusoidal signal to the fourth excitation coil to form a composite alternating magnetic field.

The composite alternating magnetic field includes a magnetic field formed by the first excitation coil, a magnetic field formed by the second excitation coil, a magnetic field formed by the third excitation coil and a magnetic field formed by the fourth excitation coil. The second AC sinusoidal signal is a signal obtained by phase shifting the first AC sinusoidal signal by 90°. The third AC sinusoidal signal is a signal having the same amplitude as and an opposite direction to the first AC sinusoidal signal. The fourth AC sinusoidal signal is a signal obtained by phase shifting the third AC sinusoidal signal by 90°.

In S3, when the excitation module passes over a to-be-detected pipeline circumferential weld, the detection unit acquires an induced voltage amplitude of the to-be-detected pipeline circumferential weld, and sends the induced voltage amplitude to the signal acquisition module.

In S4, the signal acquisition module determines identification information of the to-be-detected pipeline circumferential weld, and sends the induced voltage amplitude and the identification information of the to-be-detected pipeline circumferential weld to the signal processing module.

In S5, the signal processing module determines a defect detection result of the to-be-detected pipeline circumferential weld based on the induced voltage amplitude and the identification information of the to-be-detected pipeline circumferential weld. The defect detection result includes a normal result and an abnormal result.

For the description of the above method embodiments, reference can be made to the above device embodiments. Furthermore, the explanation and the description of the beneficial effects of any of the above-mentioned methods for lift-off resistant detection of pipeline circumferential weld defects can be referred to the corresponding device embodiments described above.

## Claims

1. An apparatus for lift-off resistant detection of pipeline circumferential weld defects, comprising: an excitation signal generator, a time division multiplexing module, at least one excitation module, a signal acquisition module and a signal processing module; wherein the excitation signal generator is connected to the time division multiplexing module, the time division multiplexing module is connected to the excitation module, the excitation module is connected to the signal acquisition module, and the signal acquisition module is connected to the signal processing module;
the excitation module comprises a first orthogonal excitation unit, a second orthogonal excitation unit and a detection unit, wherein both the first orthogonal excitation unit and the second orthogonal excitation unit are connected to the time division multiplexing module, the first orthogonal excitation unit comprises a first excitation coil and a second excitation coil arranged orthogonally to each other, the second orthogonal excitation unit comprises a third excitation coil and a fourth excitation coil arranged orthogonally to each other, and the detection unit is connected to the signal acquisition module;
the excitation signal generator is configured to output an alternating current (AC) sinusoidal signal to the time division multiplexing module;
the time division multiplexing module is configured to send, according to the AC sinusoidal signal, a first AC sinusoidal signal to the first excitation coil, a second AC sinusoidal signal to the second excitation coil, a third AC sinusoidal signal to the third excitation coil and a fourth AC sinusoidal signal to the fourth excitation coil to form a composite alternating magnetic field; wherein the composite alternating magnetic field comprises a magnetic field formed by the first excitation coil, a magnetic field formed by the second excitation coil, a magnetic field formed by the third excitation coil and a magnetic field formed by the fourth excitation coil, the second AC sinusoidal signal is a signal obtained by phase shifting the first AC sinusoidal signal by 90°, the third AC sinusoidal signal is a signal having a same amplitude as and an opposite direction to the first AC sinusoidal signal, and the fourth AC sinusoidal signal is a signal obtained by phase shifting the third AC sinusoidal signal by 90°;
the detection unit is configured to, in response to the excitation module passing over a to-be-detected pipeline circumferential weld, acquire an induced voltage amplitude of the to-be-detected pipeline circumferential weld, and is configured to send the induced voltage amplitude to the signal acquisition module;
the signal acquisition module is configured to determine identification information of the to-be-detected pipeline circumferential weld, and is configured to send the induced voltage amplitude and the identification information of the to-be-detected pipeline circumferential weld to the signal processing module; and
the signal processing module is configured to determine a defect detection result of the to-be-detected pipeline circumferential weld based on the induced voltage amplitude and the identification information of the to-be-detected pipeline circumferential weld, and the defect detection result comprises a normal result and an abnormal result.

2. The apparatus for lift-off resistant detection of pipeline circumferential weld defects according to claim 1, wherein a plurality of excitation modules are provided, and the plurality of excitation modules are arranged in a circumferential array around the time division multiplexing module.

3. The apparatus for lift-off resistant detection of pipeline circumferential weld defects according to claim 2, wherein the signal acquisition module further communicates with the time division multiplexing module, the signal acquisition module is further configured to determine identification information of a target excitation module for acquiring the induced voltage amplitude of the to-be-detected pipeline circumferential weld, the target excitation module is one of the plurality of excitation modules, the signal acquisition module is further configured to send the identification information of the target excitation module to the signal processing module, and the signal processing module is configured to determine a defect location of the to-be-detected pipeline circumferential weld based on the identification information of the target excitation module.

4. The apparatus for lift-off resistant detection of pipeline circumferential weld defects according to claim 1, wherein each of the first excitation coil, the second excitation coil, the third excitation coil and the fourth excitation coil is a rectangular coil, and the detection unit comprises a circular coil.

5. The apparatus for lift-off resistant detection of pipeline circumferential weld defects according to claim 1, wherein the excitation signal generator comprises a sine wave generator and a phase shifter, the excitation signal generator is configured to output a fifth AC sinusoidal signal and a sixth AC sinusoidal signal to the time division multiplexing module, and the fifth AC sinusoidal signal and the sixth AC sinusoidal signal have opposite signal directions and a same amplitude; and
the time division multiplexing module is configured to obtain the first AC sinusoidal signal and the second AC sinusoidal signal based on the fifth AC sinusoidal signal, obtain the third AC sinusoidal signal and the fourth AC sinusoidal signal based on the sixth AC sinusoidal signal, send the first AC sinusoidal signal to the first excitation coil, send the second AC sinusoidal signal to the second excitation coil, send the third AC sinusoidal signal to the third excitation coil and send the fourth AC sinusoidal signal to the fourth excitation coil.

6. The apparatus for lift-off resistant detection of pipeline circumferential weld defects according to claim 1, wherein the signal processing module is configured to, in response to the induced voltage amplitude of the to-be-detected pipeline circumferential weld being greater than a preset threshold, determine that the defect detection result of the to-be-detected pipeline circumferential weld is the abnormal result.

7. The apparatus for lift-off resistant detection of pipeline circumferential weld defects according to claim 1, wherein the signal processing module is configured to, in response to the induced voltage amplitude of the to-be-detected pipeline circumferential weld being less than or equal to a preset threshold, determine that the defect detection result of the to-be-detected pipeline circumferential weld is the normal result.

8. The apparatus for lift-off resistant detection of pipeline circumferential weld defects according to claim 1, further comprising a protective housing, wherein the excitation signal generator, the time division multiplexing module, the excitation module, the signal acquisition module and the signal processing module are all disposed inside the protective housing.

9. The apparatus for lift-off resistant detection of pipeline circumferential weld defects according to claim 8, further comprising an arc-shaped ceramic sheet disposed at a bottom of the protective housing.

10. A method for lift-off resistant detection of pipeline circumferential weld defects, being applied to an apparatus for lift-off resistant detection of pipeline circumferential weld defects, wherein the apparatus comprises an excitation signal generator, a time division multiplexing module, at least one excitation module, a signal acquisition module and a signal processing module; wherein the excitation signal generator is connected to the time division multiplexing module, the time division multiplexing module is connected to the excitation module, the excitation module is connected to the signal acquisition module, and the signal acquisition module is connected to the signal processing module;
the excitation module comprises a first orthogonal excitation unit, a second orthogonal excitation unit and a detection unit, wherein both the first orthogonal excitation unit and the second orthogonal excitation unit are connected to the time division multiplexing module, the first orthogonal excitation unit comprises a first excitation coil and a second excitation coil arranged orthogonally to each other, the second orthogonal excitation unit comprises a third excitation coil and a fourth excitation coil arranged orthogonally to each other, and the detection unit is connected to the signal acquisition module;
the method comprises:
outputting, by the excitation signal generator, an alternating current (AC) sinusoidal signal to the time division multiplexing module;
sending, according to the AC sinusoidal signal and by the time division multiplexing module, a first AC sinusoidal signal to the first excitation coil, a second AC sinusoidal signal to the second excitation coil, a third AC sinusoidal signal to the third excitation coil, and a fourth AC sinusoidal signal to the fourth excitation coil to form a composite alternating magnetic field; wherein the composite alternating magnetic field comprises a magnetic field formed by the first excitation coil, a magnetic field formed by the second excitation coil, a magnetic field formed by the third excitation coil and a magnetic field formed by the fourth excitation coil, the second AC sinusoidal signal is a signal obtained by phase shifting the first AC sinusoidal signal by 90°, the third AC sinusoidal signal is a signal having a same amplitude as and an opposite direction to the first AC sinusoidal signal, and the fourth AC sinusoidal signal is a signal obtained by phase shifting the third AC sinusoidal signal by 90°;
in response to the excitation module passing over a to-be-detected pipeline circumferential weld, acquiring, by the detection unit, an induced voltage amplitude of the to-be-detected pipeline circumferential weld, and sending, by the detection unit, the induced voltage amplitude to the signal acquisition module;
determining, by the signal acquisition module, identification information of the to-be-detected pipeline circumferential weld, and sending, by the signal acquisition module, the induced voltage amplitude and the identification information of the to-be-detected pipeline circumferential weld to the signal processing module; and
determining, by the signal processing module, a defect detection result of the to-be-detected pipeline circumferential weld based on the induced voltage amplitude and the identification information of the to-be-detected pipeline circumferential weld, wherein the defect detection result comprises a normal result and an abnormal result.
